# EUROPEAN PATENT SPECIFICATION

(11) **EP 0 814 945 B1**
(45) Date of publication and mention of the grant of the patent: **28.11.2001**
(21) Application number: 96907834.4
(22) Date of filing: 14.03.1996
(51) Int. Cl.: B27G 19/02, B27B 5/38

(54) **DEVICE RELATED TO ROTARY SAW BLADES**
VORRICHTUNG IN BEZUG AUF KREISSÄGEBLÄTTER
DISPOSITIF SE RAPPORTANT AUX LAMES DE SCIE CIRCULAIRE

(30) Priority: 16.03.1995 SE 9500936
(43) Date of publication of application: 07.01.1998
(73) Proprietor: Gebelius, Hjördis Florence Maria, 149 21 Nynäshamn (SE)
(72) Inventor: GEBELIUS, Sven Runo Vilhelm, deceased (SE)
(74) Representative: Norén, Per Bo Arne
(86) International application number: SE9600329
(87) International publication number: WO9628288

(56) References cited:
- DE-A- 2 917 497
- SE-B- 463 358
- US-A- 3 674 065
- US-A- 4 446 760
- DERWENT'S ABSTRACT, No. B1340D/06, Week 8106; & SU,A,738 872, (LENINGRAD FORESTRY ACAD), 5 June 1980.

## Description

### Technical Field

The present invention relates to a device for rotating saw blades, intended to reduce the sound level when sawing and also to reduce the risk of injuries.

### Prior Art

A loud sound level is a well-known problem when sawing, which initially is caused when the saw teeth of a saw blade take up contact with a workpiece, and which is amplified since a substantial part of the saw blade will act as a freely oscillating resonating member, which often amplifies the sound to an almost unacceptable sound level. Sound damping housings are prevented due to the requirement of free ejection of the saw dust formed during the sawing operation, and by the requirements relating to access and cooling of the saw blade. A further well-known problem are injuries caused due to the fact that the rotation of a saw blade can not be stopped immediately, since same is rotating with high speed and during a relatively long period of time even when the feed supply to the drive motor has been switched off. As a result thereof, many accidents or accident attempts occur, even if existing protective devices disconnect the feed supply to the drive motor.

The object of the present invention is to disclose a device which substantially removes the above discussed problems, i.e. which considerably reduces the sound level during a sawing operation and also facilitates that the rotation of the saw blade can be stopped within an extremely short period of time.

A device according to the preamble of claim 1 is known, for example, from US-A-3 674 065.

### Summary of the Invention

The device for a rotary saw blade according to the present invention is mainly characterized in that on each side of the saw blade at a non-sawing portion of the saw blade is arranged at least one member contactable against the saw blade, arranged to facilitate a movement from/towards the saw blade and being arranged with channels open in direction towards the side planes of the saw blade, pressed by means of a pressure acting means in direction towards the saw blade, before start of a rotary movement of the saw blade a pneumatic and/or hydraulic medium under pressure being arranged supplied to said channels for formation of a pneumatic and/or hydraulic cushion between the saw blade and against same contactable members, which hereby are moved from their contact positions to an adjacent but separated position from the saw blade with a sound and oscillation damping pneumatic and/or hydraulic pressure influence exerted on the saw blade.

### Brief Description of the Drawing

A non-restricting example of an embodiment of a device according to the present invention is more fully described below with reference to the accompanying drawing, in which:-
Fig. 1 shows a perspective view of an example of a device according to the invention, applied by a circular saw used to cut a log; and
Fig. 2 is a schematical cross-sectional view of the example of an embodiment of a device according to the invention shown in Fig. 1, intended to illustrate the operation of same.

### Embodiments for Utilization of the Invention

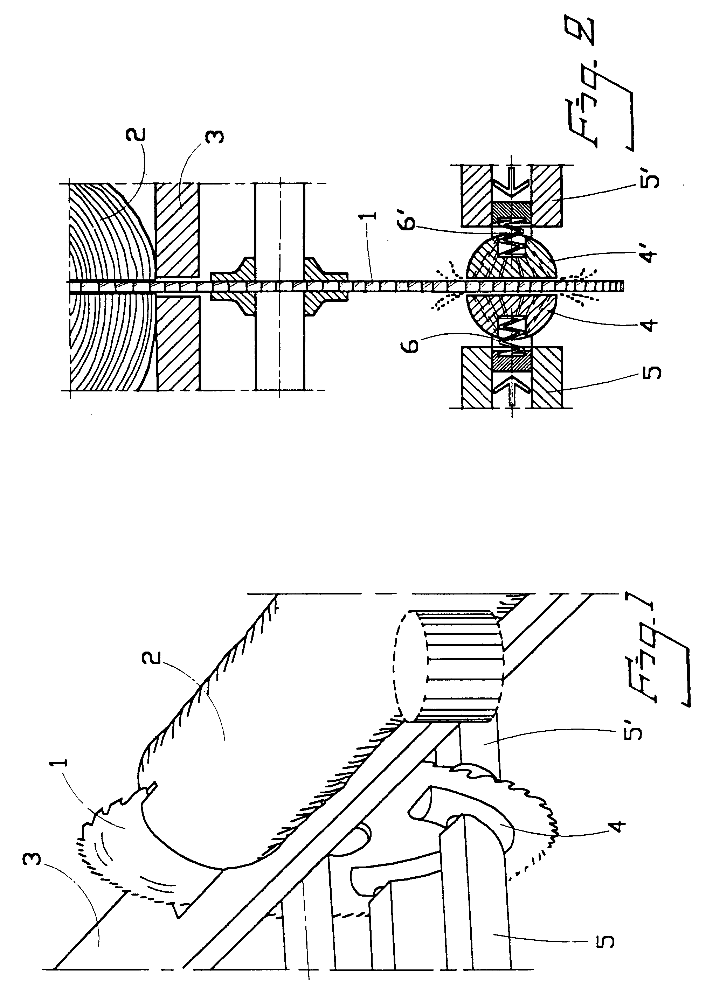

With reference to Fig. 1, 1 is used to denominate a rotary saw blade while cutting a workpiece 2, shown as a log. Below a saw table 3, onto which the workpiece 2 is fed, the saw blade 1 is surrounded on both sides by a substantially C-shaped member 4, 4', which are arranged adjacent to the saw blade 1 with a substantially plane surface, preferably having a coating or a layer of a material having a high frictional coefficient. The C-shaped members 4, 4' are arranged movable in relation to two supporting members 5, 5', having channels through which compressed air is supplied, as indicated by arrows in Fig. 2. Pressure spring means 6, 6' are also arranged, which tend to pressure the C-shaped members 4, 4' towards adjacent planes of the saw blade 1. Furthermore, the C-shaped members (not shown) are arranged with channels for the compressed air supplied from the supporting members 5, 5', which terminate into a number of holes at the surface of the C-shaped members 4, 4' which are adjacent to the two planes of the saw blade 1.

In connection with a sawing operation, and at or before the start of rotation for the saw blade 1, compressed air is supplied via the supporting members 5, 5' to the C-shaped members 4, 4', whereby same, opposed to the influence from the pressure spring means 6, 6', are moved from the saw blade 1 to a separated but adjacent position in relation to same. This is accomplished by the formation of an air cushion between the saw blade 1 and adjacent plane of the C-shaped members 4, 4', the air leaking away from the air cushion formed being shown by dots in Fig. 2.

The above mentioned air cushions will thus act in an opposed relationship to each other against the side planes of the saw blade 1, and by the part of the saw blade 1 which is not in contact with the workpiece 2, i.e. the part which during sawing is given an oscillating or vibrating movement and thereby creating an amplified and considerable part of the sound level resulting from a sawing operation. The pressure exerted against the saw blade 1 by means of the air cushions is related to the pressure of supplied compressed air as well as the pressure exerted from the pressure spring means 6, 6'. In order to facilitate adjustment of the pressure applied to the saw blade 1, this can to a certain extent be carried out by adjusting the pressure of supplied compressed air, but furthermore advantageously be carried out by arranging the pressure spring means 6, 6' with an adjustment member for increasing or decreasing the pressure exerted from the pressure spring means 6, 6' against the C-shaped members 4, 4' (not shown). Such an adjustment member may in its simplest form consist of a screw device by an end portion of the pressure spring means 6, 6', arranged to facilitate an increased/decreased pre-tension. Such an adjustment member can be influenced manually, but also be operated mechanically, electrically, hydraulically, pneumatically or any other suitable fashion, and influence can be arranged to be performed simultaneously at both sides of the saw blade 1.

The pressure spring means (6, 6') can obviously also comprise of piston cylinders, which by means of pneumatic or hydraulic pressure press the C-shaped members 4, 4' in direction towards the side planes of the saw blade 1, the contact pressure being varied by control of the pressure for the pneumatic or hydraulic medium which is supplied to the piston cylinders.

The plane of the C-shaped members 4, 4' which is directed towards the saw blade 1 is preferably arranged with a surface having a high frictional coefficient. Such a surface can, for example, be arranged as a coating of such a material or as a layer of suitable material attached to the C-shaped members 4, 4', arranged with through perforations at the holes wherethrough air is supplied to form previously discussed air cushions on both sides of the saw blade 1.

Should a situation occur when the rotation of the saw blade must be stopped with immediate effect, e.g. when a manually or automatically initiated emergency stop situation occurs, the supply to the drive motor is obviously disconnected, but furthermore, the air supply is also interrupted to the channels forming the air cushions between the C-shaped members 4, 4' and the saw blade 1. As a result, the C-shaped members 4, 4' are pressed against the side planes of the saw blade 1 by the pressure spring means 6, 6', and thus act in a fashion similar to the brake pads in a disk brake. Provided that the contacting surfaces as previously described have a coating or a layer of a material with high frictional coefficient, the rotation of the saw blade 1 is interrupted with almost immediate action.

For those applications when piston cylinders are used a pressure spring means 6, 6', the braking function can obviously be increased by increasing the pressure of supplied hydraulic or pneumatic medium when the air supply forming the air cushions is interrupted. Interruption of said air supply, as well as a simultaneous increase of the pressure for medium supplied to possibly existing piston cylinders, can easily be implemented by a person skilled in the art by use of known control techniques for pneumatic and/or hydraulic valve means.

With regard to shown and described example of an embodiment, same can obviously be modified in a number of ways within the scope of the invention. The C-shaped members 4, 4' can thus obviously be given a different shape, e.g. with an increased area covering extension adapted to cover a larger or smaller part of the non-active part of the saw blade 1. With the shown C-shape, an outer peripheral portion of the saw blade 1 will be influenced by the air cushions, i.e. the part which strongly amplifies the sound created during a sawing operation. By changing the shape of the C-shaped members 4, 4' to influence a larger area from the action of the air cushions, the sound level can be further decreased, and the braking power during an emergency stop situation will also obviously be increased.

It should also be noted, that described air cushions at each side of the saw blade 1 obviously can be replaced by a liquid medium, which under pressure is supplied to the channels and the openings at the C-shaped members 4, 4'. In this case, instead of an "air cushion", a liquid cushion is formed, which dampens saw blade 1 oscillation and thus sound level during sawing operations. Previously described braking action is obtained by interrupting the supply of liquid, and furthermore, use of a liquid medium facilitates an improved cooling action for the saw blade 1. By a suitable choice of liquid medium, a greasing action can also be accomplished for such sawing operations when this is desired, e.g. when cutting metallic workpieces 2.

Furthermore, the C-shaped members 4, 4' have been described as a single member on each side of the saw blade 1. For certain applications, it may be desirable to design each C-shaped member 4, 4' as two or more separated members, e.g. in order to improve ejection of saw dust, cooling liquid or similar. For the same reason, a single C-shaped member 4, 4' can be arranged with grooves or similar by the surface adjacent to the saw blade 1, which divide the adjacent surface into two or more segments.

The present invention is thus in no way restricted to the example of an embodiment described with reference to the accompanying drawing, since it can be further modified with regard to design and utilized pressure medium, and it is also within the scope of the invention to utilize a combination of a pneumatic and hydraulic medium, preferably supplied from with regard to each other individual channels, which results in the formation of a combined liquid and air cushion.

### Industrial Applicability

As disclosed in the above description, the device according to the present invention comprises a combined guiding, damping and braking device, which to a substantial extent reduces previously known problems relating to an unacceptably load sound level during sawing with rotary saw blades, and which also acts as a safety device, which by means of an extremely rapid braking action considerably reduces the risk for injuries to persons during a sawing operation.

## Claims

1. Guiding, damping and braking device for a rotary saw blade (1), comprising at least one on each side of the saw blade (1) located member (4, 4') arranged to facilitate contact against the side surfaces of the saw blade (1) by means of a movement towards/away from the saw blade (1) and being arranged with channels open towards the side surfaces of the saw blade (1), pressed by means of a pressure acting means (6, 6') in direction towards the saw blade (1), a pneumatic and/or hydraulic medium being arranged supplied to said channels prior to initiation of a rotary movement for the saw blade (1), thereby forming a pneumatic and/or hydraulic cushion between the saw blade (1) and against same contactable members (4, 4') thus forming a guiding and vibration damping pneumatic and/or hydraulic pressure acting on the saw blade (1), **characterized in, that** a valve means is arranged to interrupt the supply of pneumatic and/or hydraulic medium to the channels in the contactable members (4, 4') in connection with disconnection of the electric supply to the drive motor of the saw blade (1), preferably in an emergency stop situation, whereby said pressure acting means (6, 6') with brake action press the contactable members (4, 4') against the saw blade (1).

2. Device according to claim 1, **characterized in, that** at least part of the surface by which the contactable members (4, 4') take up contact against the side surfaces of the saw blade (1) have a surface, a coating or a layer with a high frictional coefficient.

3. Device according to any one of claims 1 and 2, **characterized in, that** the pressure acting means (6, 6') is arranged to exert an increased pressure in connection with disconnection of the electric supply to the drive motor of the saw blade (1), preferably in an emergency stop situation.

4. Device according to claim 3, **characterized in, that** the pressure acting means (6, 6') comprises of a piston cylinder means, and that the pressure of supplied hydraulic or pneumatic medium is arranged to be increased in connection with interruption of the supply of pneumatic and/or hydraulic medium to the channels in the contactable members (4, 4').

5. Device according to any one of claims 1 - 4, **characterized in, that** the contactable members (4, 4') are arranged with the contact surface on each side of the saw blade (1) divided into at least two individually separated segments.

## Patentansprüche

1. Steuer-, Dämpf- und Bremsvorrichtung für eine Kreissägeklinge (1) mit zumindest einem auf jeder Seite der Sägeklinge (1) angebrachten Element (4, 4'), das vorgesehen ist mit Hilfe einer Bewegung in Richtung zu/weg von der Sägeklinge (1) den Kontakt mit den Seitenflächen der Sägeklinge (1) zu ermöglichen, gegen die Seitenflächen der Sägeklinge (1) offene Kanäle hat und mit Hilfe von Druckmitteln (6, 6') in Richtung der Sägeklinge (1) gedrückt wird, wobei ein pneumatisches und/oder hydraulisches Medium vorgesehen ist den Kanälen zugeführt zu werden vor der Einleitung einer Drehbewegung der Sägeklinge (1), wodurch ein pneumatisches und/oder hydraulisches Kissen zwischen der Sägeklinge (1) und den Kontaktelementen (4, 4') geschaffen wird, so dass ein steuernder und vibrationsdämpfender pneumatischer und/oder hydraulischer Druck auf die Sägeklinge (1) einwirkt, **dadurch gekennzeichnet, dass** ein Ventilmittel vorgesehen ist im Zusammenhang mit der Abschaltung der Stromzufuhr zum Antriebsmotor für die Sägeklinge (1) die Zufuhr des pneumatischen und/oder hydraulischen Mediums zu den Kanälen in den Kontaktelementen (4, 4') zu unterbrechen, vorzugsweise in einer Notaus-Situation, wodurch die Druckmittel (6, 6') mit Bremswirkung die Kontaktelemente (4, 4') gegen die Sägeklinge (1) drücken.

2. Vorrichtung gemäss Anspruch 1, **dadurch gekennzeichnet, dass** zumindest ein Teil der Fläche, mit welcher die Kontaktelemente (4, 4') in Kontakt mit der Seitenfläche der Sägeklinge (1) treten, eine Oberfläche, einen Belag oder eine Schicht mit hohem Reibungskoeffizient hat.

3. Vorrichtung gemäss einem der Ansprüche 1 und 2, **dadurch gekennzeichnet, dass** die Druckmittel (6, 6') vorgesehen sind im Zusammenhang mit der Abschaltung der Stromzufuhr zum Antriebsmotor für die Sägeklinge (1), vorzugsweise einer Notaus-Situation, einen erhöhten Druck auszuüben.

4. Vorrichtung gemäss Anspruch 3, **dadurch gekennzeichnet, dass** die Druckmittel (6, 6') ein Kolbenzylindergerät umfasst und dass der Druck vom hydraulischen oder pneumatischen Medium vorgesehen ist im Zusammenhang mit der Abschaltung der Zufuhr pneumatischen und/oder hydraulischen Mediums zu den Kanälen in den Kontaktelementen (4, 4') erhöht zu werden.

5. Vorrichtung gemäss einem der Ansprüche 1-4, **dadurch gekennzeichnet, dass** die Kontaktelemente (4, 4') auf jeder Seite der Sägeklinge (1) eine Kontaktfläche haben, die in mindestens zwei von einander getrennten Segmenten aufgeteilt ist.

## Revendications

1. Appareil de guidage, d'amortissement et de freinage d'une lame (1) de scie rotative, comprenant, à raison d'au moins un de chaque côté de la lame de scie (1), un organe (4, 4') disposé afin qu'il facilite le contact contre les surfaces latérales de la lame de scie (1) par rapprochement et éloignement de la lame de scie (1), disposé avec des canaux débouchant vers des surfaces latérales de la lame de scie (1), et repoussé par un dispositif (6, 6') agissant par pression vers la lame de scie (1), un fluide pneumatique et/ou hydraulique étant transmis auxdits canaux avant le début du mouvement de rotation de la lame de scie (1) avec formation de cette manière d'un coussin pneumatique et/ou hydraulique entre la lame de scie (1) et contre les organes (4, 4') de contact, avec formation de cette manière d'une pression pneumatique et/ou hydraulique de guidage et d'amortissement de vibrations agissant sur la lame de scie (1), **caractérisé en ce qu'**un dispositif à soupape est destiné à interrompre la transmission du fluide pneumatique et/ou hydraulique vers les canaux des organes (4, 4') de contact lors de la déconnexion de l'alimentation électrique du moteur d'entraînement de la lame de scie (1), de préférence en cas d'arrêt d'urgence, si bien que le dispositif agissant par pression (6, 6') ayant une action de freinage repousse les organes de contact (4, 4') contre la lame de scie (1).

2. Appareil selon la revendication 1, **caractérisé en ce qu'**une partie au moins de la surface avec laquelle les organes de contact (4, 4') sont en contact avec les surfaces latérales de la lame de scie porte une surface, un revêtement ou une couche ayant un coefficient élevé de frottement.

3. Dispositif selon l'une quelconque des revendications 1 et 2, **caractérisé en ce que** le dispositif agissant par pression (6, 6') est destiné à exercer une pression accrue lors de la déconnexion de l'alimentation électrique du moteur d'entraînement de la lame de scie (1), de préférence en cas d'arrêt d'urgence.

4. Appareil selon la revendication 3, **caractérisé en ce que** le dispositif agissant par pression (6, 6') comprend un dispositif à vérin contenant un piston, et la pression du fluide hydraulique ou pneumatique transmis est destinée à augmenter lors de l'interruption de la transmission du fluide pneumatique et/ou hydraulique aux canaux des organes de contact (4, 4').

5. Appareil selon l'une quelconque des revendications 1 à 4, **caractérisé en ce que** les organes de contact (4, 4') sont disposés avec leur surface de contact de chaque côté de la lame de scie (1) divisée en au moins deux segments séparés individuellement.
